# EUROPEAN PATENT APPLICATION

(11) **EP 3 809 000 A1**
(43) Date of publication of application: **21.04.2021**
(21) Application number: 20200204.4
(22) Date of filing: 06.10.2020
(51) Int. Cl.: F16B 37/02

(54) **STAMPED METAL SHEET FASTENER**

(30) Priority: 15.10.2019 US 201916653507
(71) Applicant: Newfrey LLC, New Britain, CT 06053 (US)
(72) Inventor: BENEDETTI, Steven M., Macomb, Michigan 48042 (US); BOYLAN, Wayne Robert, Macomb Township, 48044 (US)
(74) Representative: SBD IPAdmin

(57) **Abstract**

A stamped metal sheet fastener can include a head having a screw aperture defining a screw axis and a first longitudinal side can extend from the head. An insertion end can extend from the first longitudinal side to a second longitudinal side. Aperture retention wings can extend from opposite sides of a gap in the second longitudinal side and can be positioned on opposite lateral sides. The retention wings can be designed to flex longitudinally inwardly toward each other and can narrow the gap during insertion and to engage opposite lateral sides of the aperture to retain the stamped metal fastener thereto. An arresting notch can be formed in each of the retention wings and arresting tabs can extend from the first longitudinal side into the arresting notches to limit axial movement of the first longitudinal side relative to the second longitudinal side.

## Description

### FIELD

The present disclosure relates to stamped metal sheet fasteners designed to couple a first component having a screw extending therethrough to a second component having an aperture therein.

### BACKGROUND

This section provides background information related to the present disclosure which is not necessarily prior art.

Fasteners formed or stamped from metal sheets can offer advantages, including low head thickness and other small dimensions that can enable it to be used in a variety of low clearance applications. It can be difficult, however, to design such stamped metal sheet fasteners to provide both low insertion force and high retention or extraction forces.

### SUMMARY

This section provides a general summary of the disclosure, and is not a comprehensive disclosure of its full scope or all of its features.

In accordance with one aspect of the present disclosure, a stamped metal sheet fastener can be designed to couple with an elongated aperture that is elongated in a longitudinal direction relative to a lateral direction and with a screw. The stamped metal sheet fastener can include a head having a screw aperture therethrough that defines a screw axis. A first longitudinal side can extend from the head. An insertion end can extend from the first longitudinal side to a second longitudinal side. The first longitudinal side and the second longitudinal side can be positioned on opposite longitudinal sides of the screw axis, respectively. A pair aperture retention wings can extend from the second longitudinal side and can be bent to be positioned on opposite lateral sides of the screw axis, respectively. The pair of aperture retention wings can be designed to flex longitudinally inwardly toward each other and toward the screw axis during insertion into the elongated aperture and to engage opposite lateral sides of the elongated aperture to retain the stamped metal fastener thereto. An arresting notch can be formed in each of the pair of aperture retention wings. A pair of arresting tabs can extend from the first longitudinal side into the arresting notches, respectively. The arresting notches can engage the arresting tabs, respectively, to limit axial movement of the first longitudinal side with the head relative to the second longitudinal side with the aperture retention wings.

In an embodiment, the aperture retention wings are designed to collapse inwardly without contacting a screw extending through the screw aperture and along the screw axis in a coupling position.

In an embodiment, the aperture retention wings are turned inwardly toward the first longitudinal side with a portion of the aperture retention wings closest to the first longitudinal side being positioned laterally closer to the screw axis than the first longitudinal side.

In an embodiment, the aperture retention wings have a U-shaped cross-section perpendicular to the screw axis.

In an embodiment, a radius of the U-shaped cross-section gradually increases from the insertion end toward the head.

In an embodiment, the arresting tabs are turned laterally inwardly toward the second longitudinal side and are positioned longitudinally inward of an adjacent outer lateral surface of the aperture retention wings, respectively.

In an embodiment, the arresting notch is provided in a portion of the aperture retention wings that is located laterally between the first longitudinal side and the screw axis.

In an embodiment, the second longitudinal side includes a gap between a pair of wing supports and the gap narrows as the aperture retention wings move longitudinally inwardly toward each other.

In an embodiment, the gap extends into the insertion end and intersects the screw axis.

In an embodiment, a longitudinal distance between outer lateral surfaces of the aperture retention wings is at least two times a lateral distance between the first and second longitudinal sides.

In an embodiment, the aperture retention wings are designed to resist an extraction force of at least 700 Newtons.

In an embodiment, a lateral distance between the first and second lateral sides is less than 8 mm.

In accordance with another aspect of the present disclosure, a stamped metal sheet fastener can be designed to couple with an elongated aperture that is elongated in a longitudinal direction relative to a lateral direction and with a screw. The stamped metal sheet fastener can include a head having a screw aperture therethrough that defines a screw axis. A first longitudinal side can extend from the head. An insertion end can extend from the first longitudinal side to a second longitudinal side. The first longitudinal side and the second longitudinal side can be positioned on opposite longitudinal sides of the screw axis, respectively. The second longitudinal side can include a pair of wing supports with a gap between the wing supports. A pair of aperture retention wings can extend from the pair of wing supports of the second longitudinal side, respectively. The aperture retention wings can be positioned on opposite lateral sides of the screw axis. The pair of aperture retention wings can be flexible longitudinally inwardly toward each other and toward the screw axis with the pair of wing supports moving toward each other to narrow the gap during insertion into the elongated aperture and to engage opposite lateral sides of the elongated aperture to retain the stamped metal fastener thereto.

In an embodiment, the gap extends into the insertion end and intersects the screw axis.

In an embodiment, the aperture retention wings are designed to collapse inwardly without contacting a screw extending through the screw aperture and along the screw axis in a coupling position.

In an embodiment, the aperture retention wings are turned inwardly toward the first longitudinal side with a portion of the aperture retention wings closest to the first longitudinal side being positioned laterally closer to the screw axis than the first longitudinal side.

In an embodiment, the aperture retention wings have a U-shaped cross section perpendicular to the screw axis.

In an embodiment, a radius of the U-shaped cross section gradually increases from the insertion end toward the head.

In an embodiment, a longitudinal distance between outer lateral surfaces of the aperture retention wings is at least two times a lateral distance between the first and second longitudinal sides.

In an embodiment, the aperture retention wings are designed to resist an extraction force of at least 700 Newtons.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Fig. 1 is an exploded view including one example of a stamped metal sheet fastener with a first component having an elongated aperture, a second component having a screw aperture therethrough, and a screw.
Fig. 2 is a perspective view of the components of Fig. 1 assembled together.
Fig. 3 is a top plan view of the stamped metal sheet fastener of Fig. 1.
Fig. 4 is a bottom plan view of the stamped metal sheet fastener of Fig. 1.
Fig. 5 is a first longitudinal side elevation view of the stamped metal sheet fastener of Fig. 1.
Fig. 6 is a second longitudinal side elevation view of the stamped metal sheet fastener of Fig. 1.
Fig. 7 is a lateral side elevation view of the stamped metal sheet fastener of Fig. 1.
Fig. 8 is a cross-section view similar to Fig. 7 of the stamped metal sheet fastener of Fig. 1.
Fig. 9 is a longitudinal side elevation view of the components of Fig. 1 assembled together.
Fig. 10 is a top plan view of a metal sheet or blank from which the stamped metal sheet fastener of Fig. 1 can be stamped or formed.

Corresponding reference numerals indicate corresponding parts throughout the several views of the drawings.

### DETAILED DESCRIPTION

Example embodiments will now be described more fully with reference to the accompanying drawings.

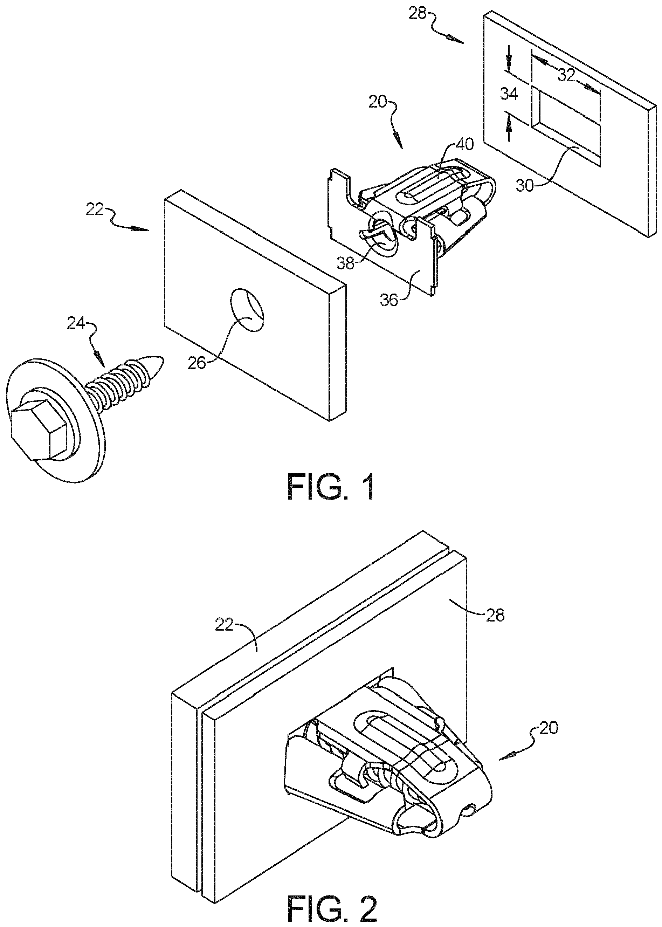

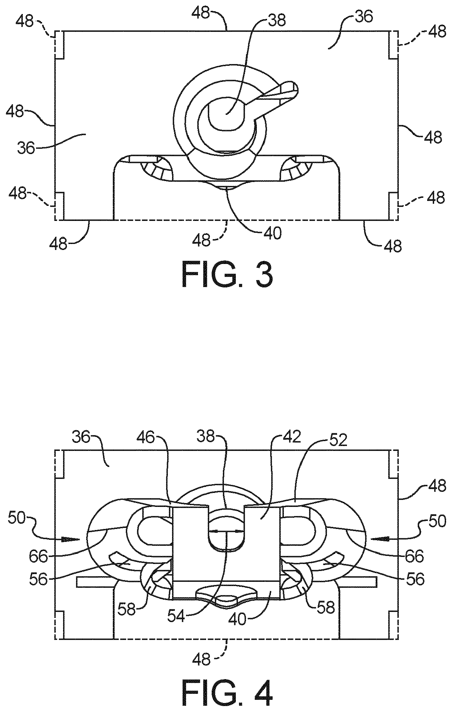

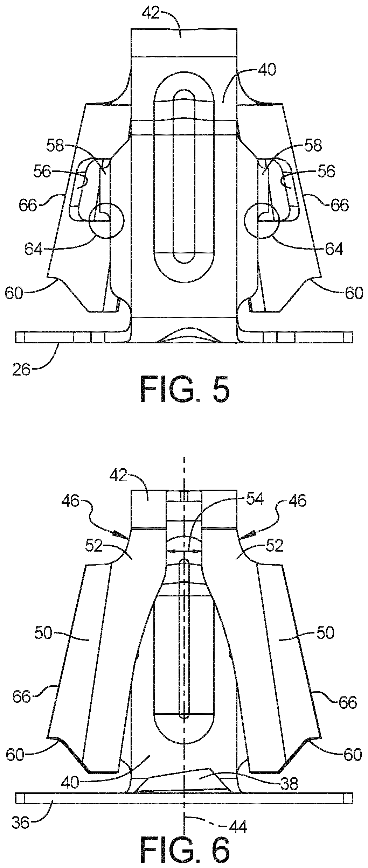

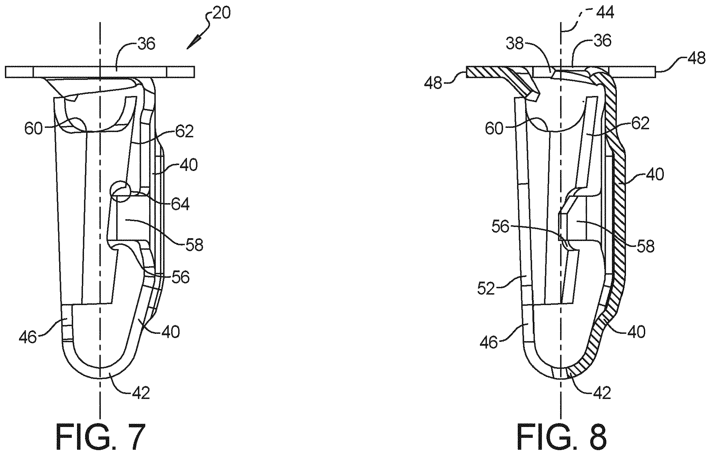

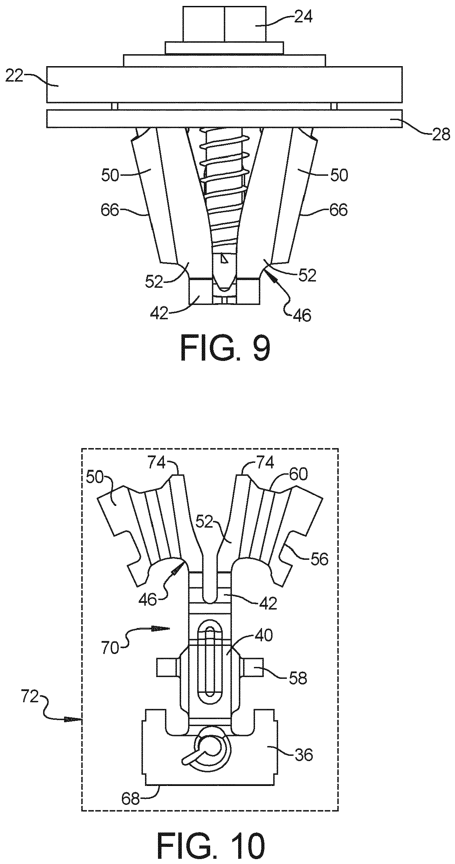

Referring to Figs. 1-10, an example of stamped metal sheet fastener 20 in accordance with the present disclosure is illustrated and described below. Such stamped metal fasteners 20 in accordance with the present disclosure are stamped or formed from a flat metal sheet or blank. In addition, such stamped metal fasteners 20 are designed to couple a first component 22 having a screw 24 extending therefrom, such as through a screw aperture 26, to a second component 28 having an elongated aperture 30 that is elongated in a longitudinal direction 32 relative to a lateral direction 34.

As in the illustrated example, the stamped metal sheet fastener 20 can include a head 36 having a screw aperture 38 therethrough. Such a screw aperture 38 is designed to couple with a screw 24 through threaded engagement. The screw aperture 38 defines a screw axis 44. In other words, the screw aperture 38 defines an axis 44 of a screw 24 when the screw 24 is threadably engaged with the screw aperture 38.

A first longitudinal side 40 can extend from the head 36. An insertion end 42 can extend from the first longitudinal side 40 to a second longitudinal side 46. The first longitudinal side 40 and the second longitudinal side 46 can be positioned on opposite longitudinal sides of the screw axis 44, respectively, with the insertion end 42 spanning across the screw axis 44 and between the first and second longitudinal sides 40 and 46, respectively. Both the first longitudinal side 40 and the second longitudinal side 46 can be positioned under the head 36, i.e., below the head 36 and within an overall footprint, indicated by dashed lines and edges 48 of the head 36.

A pair of aperture retention wings 50 can extend from the second longitudinal side 46. The aperture retention wings 50 can be positioned on opposite lateral sides of the screw axis 44, respectively. As in this example, the second longitudinal side 46 can include a pair of wing supports 52 with a slot or gap, indicated by double headed arrow 54, extending between the wing supports 52. The pair of aperture retention wings 50 can be flexible longitudinally inwardly toward each other and toward the screw axis 44 during insertion as a result of the wings 50 engaging opposite lateral ends of the elongated panel aperture 30. As in this embodiment, the pair of wing supports 52 of the second longitudinal side 46 can move longitudinally toward each other to narrow the gap 54 as the pair of aperture retention wings 50 flex longitudinally inwardly toward each other.

As in this example, the longitudinal inward flexing of the aperture retention wings 50 toward each other that occurs during insertion of the metal sheet fastener 20 into the component aperture 30 can occur without resulting in the aperture retention wings 50 contacting or engaging the screw 24 mounted to the metal sheet fastener 20. This can help maintain the force required to insert the fastener 20 into the component aperture 30, or fastener 20 insertion force, low.

The aperture retention wings 50 can be turned, e.g., bent, inwardly toward each other and toward first longitudinal side 40. A portion of the aperture retention wings 50 closest the first longitudinal side 40 can be positioned laterally closer to the screw axis 44 than the first longitudinal side 40, or laterally between the screw axis 44 and the first longitudinal side 40. This can allow the edge of the retention wing 50 that is closest to the first longitudinal side 40 to pass laterally inside of the first longitudinal side 40, for example adjacent an inner surface of the first longitudinal side 40, as the aperture retention wings 50 move longitudinally inwardly toward each other during insertion. Each of these can help maintain the fastener 20 insertion force low.

As in this example, the aperture retention wings 50 can have an outer lateral surface 66 or profile that is angled outwardly from the insertion end 42 toward the head 36. In other words, the distance from the screw axis 44 to the outer lateral surface 66 or profile gradually increases from the insertion end 42 toward the head 36. Alternatively or additionally, the inwardly turned aperture retention wings 50 can have a generally U-shaped cross-section or profile perpendicular to the screw axis 44. The radius of such a U-shaped cross-section or profile can gradually increase from the insertion end 42 toward the head 36. Each of these can help maintain the fastener 20 insertion force low.

As in this example, the fastener 20 can be designed to require a high force to remove or extract the fastener from the component aperture 30, or fastener 20 extraction force. For example, the engagement end 60 of the aperture retention wings 50 can have a shape that ineffectively translates an axial extraction force applied to the screw 24 or head 36 to a longitudinally directed force causing the wings 50 to flex inwardly toward each other. As in this example, the engagement end 60 can have at least a portion that is essentially perpendicular to the screw axis 44. Thus, the fastener 20 can have a high extraction force, despite the engagement end 60 of the aperture retention wings 50 engaging against the shorter, opposite lateral sides of the elongated aperture 30 to retain the stamped metal fastener 20 therein.

The aperture retention wings 50 can be supported by and can extend and span laterally across the screw axis 44 from the insertion end 42 and wing supports 52 of the second longitudinal side 46. The wing supports 52 of the second longitudinal side 46, and the insertion end 42 from which they extend are all aligned or extend in the longitudinal direction. Thus, when the aperture retention wings 50 flex longitudinally inwardly, they move essentially parallel to and are working against a relatively large longitudinal length or dimension of these longitudinally extending wing support elements 52, 46, 42. This is in contrast to aperture retention wings that are cut from a side and extend and move perpendicular to the supporting side, so they only have to work against the metal sheet thickness (i.e., smallest metal sheet dimension) of the supporting component or components to bend inwardly.

In some cases, the stamped metal sheet fastener 20 can be designed to require a high extraction force of 700 Newtons or greater. In other cases, the stamped metal sheet fastener 20 can be designed to require an extraction force of 800 Newtons or greater. In other cases, the stamped metal sheet fastener 20 can be designed to require an extraction force of 900 Newtons or greater. In some cases, a longitudinal distance between the outer lateral surfaces 66 of the aperture retention wings 50 is at least two times a lateral distance between the first longitudinal side 40 and the second longitudinal side 46. In some cases, the lateral distance between the first longitudinal side 40 and the second longitudinal side 46 can be less than 1 cm, or less than 8 mm. In one example, the stamped metal sheet fastener 20 can be designed to couple with an elongated component aperture 30 that has a longitudinal dimension of about 12 mm and a lateral dimension of about 6.5 mm.

As in this example of the metal sheet fastener 20, the first longitudinal side 40 or connected side can extend between and be connected at both axial ends to the head 36 and the insertion end 42, respectively, while the second longitudinal side 46 or unconnected side can extend from the insertion end 42 to the distal free engagement ends 60 of the aperture retention wings 50 spaced from the head 36. Thus, the second side is only connected at one axial end to the insertion end 42, and not at its opposite axial end to the head 36. This can cause the first longitudinal side 40 to move axially relative to the second longitudinal side 46 under an extraction force.

Specifically, under a high extraction force, the first longitudinal side 40 can move axially upward (i.e., in the removal direction) with the head 36 as the head 36 is pulled away from the component aperture 30 under high extraction forces. At the same time, the second longitudinal side 46 can resist similar axially upward movement in response to the removal force, due to the aperture retention wings 50 being engaged with the aperture component 28 at the engagement ends 60. This can result in the first longitudinal side 40 moving axially upward with respect to the second longitudinal side 46. In addition, this can result in the space or gap between the free engagement end 60 of the retention wings 50 and the head 36 increasing, and other distortions or damage to the metal sheet fastener 20.

As in this example, an arresting notch 56 can be formed in each aperture retention wing 50, and a cooperating pair of arresting tabs 58 can extend from the first longitudinal side 40 into respective arresting notches 56. The arresting notch 56 can be positioned and designed to reduce the possibility that it will engage or catch an edge of the aperture 30 during insertion, keeping insertion forces low. For example, the arresting notch 56 can be provided in an edge 62 of the retention wing 50 positioned laterally between the first longitudinal side 40 and the screw axis 44.

Similarly, the arresting tabs 58 can be positioned and designed to reduce the possibility that it will engage or catch an edge of the aperture 30 during insertion, keeping insertion forces low. For example, the arresting tabs 58 can be bent laterally inwardly toward the screw axis 44 or the second longitudinal side 46 from opposite edges of the first longitudinal side 40 and into the respective arresting notches 56. Under a large extraction force, cooperating engagement surfaces 64 of the arresting notch 56 and arresting tabs 58 can contact each other to limit upward axial movement of the first longitudinal side 40 with the head 36 relative to the aperture retention wings 50 and the second longitudinal side 46. This can enable the metal sheet fastener 20 to resist high extraction forces without damaging the metal sheet fastener 20.

As previously noted, the first longitudinal side 40 can extend from the head 36. The insertion end 42 can extend from the first longitudinal side 40 to a second longitudinal side 46. The pair of aperture retention wings 50 can extend from the second longitudinal side 46 to their engagement ends 60. Thus, the head 36 can be positioned adjacent a first terminal end 68 of the stamped metal sheet, such as a blank 70 stamped from a larger metal sheet 72, and the aperture retention wings 50 can be positioned adjacent a second terminal end 74 of the metal sheet or blank 70 that is opposite the first terminal end 68.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. Stamped metal sheet fastener (20) designed to couple with an elongated aperture (30) that is elongated in a longitudinal direction relative to a lateral direction and with a screw (24), comprising:
a head (36) having a screw aperture (38) therethrough defining a screw axis (44);
a first longitudinal side (40) extending from the head (36);
an insertion end (42) extending from the first longitudinal side (40) to a second longitudinal side (46), the first longitudinal side (40) and the second longitudinal (46) side being positioned on opposite longitudinal sides of the screw axis (44), respectively;
a pair of aperture retention wings (50) extending from the second longitudinal side (46) and being bent to be positioned on opposite lateral sides of the screw axis (44), respectively, and the pair of aperture retention wings (50) being designed to flex longitudinally inwardly toward each other and toward the screw axis (44) during insertion into the elongated aperture and to engage opposite lateral sides of the elongated aperture to retain the stamped metal fastener thereto;
an arresting notch (56) formed in each of the pair of aperture retention wings (50);
a pair of arresting tabs (58) extending from the first longitudinal side (40) into the arresting notches (56), respectively, the arresting notches (56) engaging the arresting tabs (58), respectively, to limit axial movement of the first longitudinal side with the head relative to the second longitudinal side with the aperture retention wings.

2. Stamped metal sheet fastener (20) of claim 1, wherein the aperture retention wings (50) are designed to collapse inwardly without contacting a screw extending through the screw aperture and along the screw axis (44) in a coupling position.

3. Stamped metal sheet fastener (20) of claim 1 or 2, wherein the aperture retention wings (50) are turned inwardly toward the first longitudinal side (40) with a portion of the aperture retention wings (50) closest to the first longitudinal side (40) being positioned laterally closer to the screw axis than the first longitudinal side (40).

4. Stamped metal sheet fastener (20) of any of claims 1 to 3, wherein the arresting tabs (58) are turned laterally inwardly toward the second longitudinal side (46) and are positioned longitudinally inward of an adjacent outer lateral surface of the aperture retention wings (50), respectively.

5. Stamped metal sheet fastener (20) of any of claims 1 to 4, wherein the arresting notch (56) is provided in a portion of the aperture retention wings (50) that is located laterally between the first longitudinal side (40) and the screw axis (44).

6. Stamped metal sheet fastener (20) of any of claims 1 to 5, wherein the second longitudinal side (46) includes a gap between a pair of wing supports(52) and the gap narrows as the aperture retention wings (50) move longitudinally inwardly toward each other.

7. Stamped metal sheet fastener of any of claims 1 to 6, wherein a lateral distance between the first and second lateral sides (40, 46) is less than 8 mm.

8. A stamped metal sheet fastener (20) designed to couple with an elongated aperture that is elongated in a longitudinal direction relative to a lateral direction, comprising:
a head (36) having a screw aperture therethrough defining a screw axis (44);
a first longitudinal side (40) extending from the head (36);
an insertion end (42) extending from the first longitudinal side (40) to a second longitudinal side (46), the first longitudinal side (40) and the second longitudinal side (46) being positioned on opposite longitudinal sides of the screw axis, respectively, the second longitudinal side comprising a pair of wing supports (52) with a gap between the wing supports;
a pair of aperture retention wings (50) extending from the pair of wing supports (52) of the second longitudinal side (46), respectively, the aperture retention wings (50) being positioned on opposite lateral sides of the screw axis, and the pair of aperture retention wings being flexible longitudinally inwardly toward each other and toward the screw axis with the pair of wing supports (52) moving toward each other to narrow the gap during insertion into the elongated aperture and to engage opposite lateral sides of the elongated aperture (30) to retain the stamped metal fastener thereto.

9. Stamped metal sheet fastener (20) of claim 6 or claim 8, wherein the gap extends into the insertion end and intersects the screw axis.

10. Stamped metal sheet fastener (20) of claim 8 or 9, wherein the aperture retention wings (50) are designed to collapse inwardly without contacting a screw (24) extending through the screw aperture and along the screw axis in a coupling position.

11. Stamped metal sheet fastener (20) of any of claims 8 to 10, wherein the aperture retention wings (50) are turned inwardly toward the first longitudinal side with a portion of the aperture retention wings (50) closest to the first longitudinal side (40) being positioned laterally closer to the screw axis (44) than the first longitudinal side (40).

12. Stamped metal sheet fastener (20) of any of claims 1 to 11, wherein the aperture retention wings (50) have a U-shaped cross-section perpendicular to the screw axis (44).

13. Stamped metal sheet fastener (20) of claim 12, wherein a radius of the U-shaped cross-section gradually increases from the insertion end (42) toward the head.

14. Stamped metal sheet fastener (20) of any of claims 1 to 13, wherein a longitudinal distance between outer lateral surfaces of the aperture retention wings (50) is at least two times a lateral distance between the first and second longitudinal sides.

15. The stamped metal sheet fastener (20) of any of claims 1 to 14, wherein the aperture retention wings (50) are designed to resist an extraction force of at least 700 Newtons.
